# EUROPEAN PATENT SPECIFICATION

(11) **EP 1 769 026 B1**
(45) Date of publication and mention of the grant of the patent: **30.04.2014**
(21) Application number: 05770941.2
(22) Date of filing: 20.07.2005
(51) Int. Cl.: C08L 23/08, C08L 91/00

(54) **ENERGY ABSORBING MATERIAL**
ENERGIE ABSORBIERENDES MATERIAL
MATÉRIEL D'ABSORPTION D'ÉNERGIE

(30) Priority: 22.07.2004 EP 04077122
(43) Date of publication of application: 04.04.2007
(73) Proprietor: Borealis Plastomers B.V., 6412 EZ Heerlen (NL)
(72) Inventor: BUIJSCH OP DEN, François, Antoine, Marie, NL-6367 HN Voerendaal (NL); BRULS, Wilhelmus, Gerardus, Marie, NL-6243 BE Geulle (NL); WELZEN, Leonardus, Jacobus, Johannus, Wilhelmus, NL-6129 JC Urmond (NL); SMIT, Gerardus, Hubertus, NL-7535 DA Enschede (NL); GAAG VAN DER, Frederik, Jan, NL-7443 KC Nijverdal (NL); OLDE WEGHUIS, Marinus, Hendrikus, NL-7574 AB Oldenzaal (NL)
(74) Representative: Maiwald Patentanwalts GmbH
(86) International application number: PCT/EP2005/007983
(87) International publication number: WO 2006/008168

(56) References cited:
- EP-A- 1 158 099
- EP-A- 1 386 944
- EP-A- 1 486 613
- DE-U1- 20 217 142

## Description

The invention relates to an energy absorbing material comprising polyolefin particles.
EP 1 158 099 discloses the application of polyolefin based and vinyl polymer based particles as resilient and energy absorbing infill material for synthetic grass structures. The density of the materials is preferably between 1.5 and 1.6 grams/cm3. The material is applied in the form of granules that have been blade-chopped from extruded and stretched strands. Synthetic grass structures increasingly tend to be used instead of natural grass soccer or football fields. In an analogous way synthetic grass is applied for artificial ski slopes. In order to approach the characteristics of natural grass or snow, in particular with respect to the feel of a person playing, running or sliding on it, an infill material is spread between the artificial grass blades up to a large part of their height. Further examples of filling material can be found in EP A 1158099, EP A 1386944 and DE 20217142.

This known material, although attractive for its possibility to be recycled in contrast to rubber infill material also applied, however, as infill material imparts an unsatisfactory damping effect to an artificial grass structure resulting in shocks suffered by a person playing, running or jumping on that structure.

Aim of the invention is to provide an energy absorbing material according to claims 1 to 6, suitable as infill material and giving better damping effect than the known material resulting in more pleasant and less shock generating playing characteristics.

According to the invention this aim is achieved in that the particles have as a continuous phase a copolymer of ethylene or propylene and one or more α-olefin monomers, the copolymer having a density of at most 910 kg/m³ and the particles having been formed by cutting at a temperature above the glass transition temperature of the polyolefin.

It has been found that the energy absorbing material according to the invention gives an artificial grass field good damping and further playing and feel characteristics, at least comparable to rubber filled fields and in addition to that to retain these good properties, including its original bulk properties like density and in contrast to (cross linked) rubber infill a non compacting and non aging behaviour for a long time even under heavy load conditions. The energy absorbing material according to the invention is also very suitable in other areas, e.g. as material to catch eggs laid by chicken in chicken farms, as filling material for shock damping mats in sport accommodations and underneath vibrating and shocking machinery, in body-conform cushions, as shock damping layer in shoe soles and many other applications where a good energy absorption in combination with a long lasting shape retention is preferred.

Preferably the density of the ethylene or propylene copolymer is below 905 or even below 900 or 890 kg/m³. Preferably the density is above 850 and more preferably above 860 or even above 870 kg/m³. Lower densities materials usually have lower crystallinity and have been found to give lower shape and compacting retention. The degree of crystallinity at room temperature of the copolymers preferably is above 5%, preferably above 10% and may be as high as 60%, but preferably is below 55%, more preferably below 50 %.

The copolymer may contain particulate or powdery fillers to influence the hardness. It may also contain oil to that end. Suitable fillers are those known in the art. Examples of these are talcum, calcium carbonate, magnesium hydroxide and aluminum trihydrate. Apart from fillers and oil other additives may be present in the copolymer particles. These may be the usual additives known to give certain properties to polyethylene or polypropylene copolymer particles. Examples of these are UV stabilisers, flame retardants, antistatics and additives promoting water uptake of the material. It will be understood that fillers may also act as additives at the same time and vice versa.

The copolymers in the specified density range can be applied as such, further containing only e.g. the necessary stabilisers and other minor additives but they may also be mixed with up to 40, preferably up to 30 wt% of oil and further with up to 40 wt% but preferably no more than 30 wt% of filler. The amount of fillers, oil and additives together can range up to 70 wt%, corresponding to up to 50, preferably to 45 vol.% and lower. All percentages have to be taken with respect to the total of copolymer, fillers and additives and oil, if present. The possibility to mix in said components in the specified ranges has been found to give the opportunity to make infill materials within a broad hardness range. The hardness of preferred infill materials, showing the advantageous damping effect and offering a pleasant playing or running sensation to the user, range from a Shore A hardness of at least 40, preferably at least 60 to a Shore D hardness of at most 35, preferably at most 25.

The density of the filled copolymer material will depend on the amount and density of copolymer, filler and oil present and is less than 1500 kg/m³ and preferably less than 1480 or even less than 1450 and more preferably less than 1300 or even less than 1200 or 1000 kg/m³. A lower density has been found to give better damping properties and retaining thereof over time.

Despite the presence of these additives and fillers the copolymer must remain able to form the continuous phase. In practice this means the copolymer particle consists for at least 50 vol% of the copolymer and preferably for at least 55 or even 60 vol.%.

The copolymer is a semi-crystalline copolymer of ethylene or propylene and one or more C2 to C12 α-olefin monomers, ethylene in particular being preferred in copolymers of propylene and both for ethylene and propylene, butene, hexene and octene being among the preferred α-olefin monomers.

These copolymers are known per se and can be manufactured in known processes, applying catalyst systems known for that purpose. Examples of these catalysts are Phillips, Ziegler-Natta type or single site catalysts. A suitable example of these copolymers are linear low density polyethylenes.

Preferably the copolymer is manufactured applying a single site catalyst, a preferred example of which is a metallocene catalyst. These are thermoplastic co-polymers of ethylene or propylene and as co-monomers one or more α-olefins having 2-12 C-atoms, in particular ethylene, isobutene, 1-butene, 1-hexene, 4-methyl-1-pentene en 1-octene. When ethylene with one or more C3 - C12- α-olefin monomers as co-monomers is applied, the amount of comonomer usually is lying between 1 en 50 wt.%, and preferably between 5 and 35 wt. %. When propylene is applied as the basic monomer and a single site catalyst, preferably a metallocene catalyst as catalyst the amount of co-monomers, being one or more α-olefins having 2-12 C-atoms, in particular ethylene, usually is lying between 1 en 50 wt.%, and preferably between 2 and 35 wt, more preferably between 5 and 20 wt.%.

The density of these single site catalysed copolymers may be lying between 850 and 970 kg/m³. In the infill material according to the invention single site catalysed, preferably metallocene catalysed copolymers having a density lower than 910 kg/m³ are applied. Single site, in particular metallocene catalysed ethene and propylene copolymers are distinguished from ethylene and propylene copolymers that have been manufactured with e.g. Ziegler-Natta catalysts by a narrow molecular weight distribution, Mw/Mn, the values thereof generally being between 1.5 en 3 and a limited amount of long chain branching. The number of long chain branches amounts in general at most 3 per 1000 C-atoms. Suitable copolymers of the preferred metallocene catalysed type are manufactured on a commercial scale, e.g by Exxon, DEX-Plastomers and DOW under brand names as Exact, Exceed, Engage, Affinity, Vistamaxx and Versify.

These copolymers are semi-crystalline. To enhance their shape retention at higher temperatures, also denoted here as heat stability, can be enhanced by slightly cross linking them, taking care to keep their Melt Flow Index (measured according to ASTM 1238 with 2.16 kg at 190 °C for polyethylene copolymers and at 230 °C for polypropylene copolymers) at least 0.2, preferably at least 0.5 and more preferably 1 or higher, up to 5 or even 10 g/min. Not cross linked material may have a Melt Flow Index as high as 50 or even 100 g/min. Above said values the copolymers are still melt processable and can still be easily recycled. They also do not smell since they do not contain the standard rubber additives applied in the art.

Another way of enhancing the heat stability of the copolymers is blending these with a suitable amount of higher melting polyolefin, in particular HDPE or LDPE. In this case it is important to keep the amount of added polyolefin so low that the copolymer remains the continuous phase. The skilled person will be able to select the amount of added polyolefin to achieve the desires heat stability, taking into account that the amount will be higher as a higher heat stability is desired and to achieve a certain heat stability can be lower as the melting temperature of the added polyolefin is higher. Suitable amounts of HDPE will range from 0 to 20, preferably from 2 to 10 wt% of the total of copolymer and HDPE. For LDPE this range is from 0 or 2 to 50 wt%, preferably however lower than 30 wt%.

It has been further found that the damping properties can be controlled by the size of the particles. Preferably at least 75 wt% of the particles in the infill material has a size between 0.15 and 2.5 mm. Preferably said lower boundary is at least 0.25 or even 0.35 mm and the upper boundary more preferably is at most 2, 1.5 or even 1.25 mm. More preferably at least 80, or even 90 or 95 wt% of the particles lies within said boundaries. Preferably the particle size is evenly distributed. The particle size distribution can be determined according to ASTM standard 1921-89, test method B using 4 to 6 sieves, dividing a desired particle size range in equal parts. The particle size is considered evenly distributed when on none of the sieves more than 80 wt% of the particles in the desired range is retained. Preferably no more than 70, most preferably no more than 60 wt% of the particles is retained on one of the sieves. At each sieve at least 3 wt% and preferably at least 5 wt% of the particles is retained.

Also the shape of the particles was found to influence the damping properties of the material. It was found that the more irregular the shape of the particles the better the damping properties. In this aspect an irregular shape give far better results than e.g. a spherical shape or the shape obtained by pelletizing a molten strand of the material

The extent of irregularity in shape as a deviation from a pure spherical shape can be expressed in terms of the Krumbein sphericity standard. Particles present in the material according to the invention for at least 75 wt%, preferably for at least 85 or even 90 wt% have a shape in the range below 0.45 according to said Krumbein standard. Preferably this shape is in the range of at most 0.40 or even 0.30 and lower.

Preferably the surface of the particles has a frayed structure and a fluffy or flocky structure, bringing the advantage of causing virtually no scratches or other small wounds compared to pellets or bars. This preferred structure can be characterised by its BET surface, expressed in m²/g and calculated from gas absorption data. Gas absorption are measured with a static method at 20 g samples using ASAP 2010 apparatus from Micromeritics (USA), applying krypton as the absorbate and taking 0.210 nm² as the effective surface of a krypton molecule. The measuring room was evacuated at room temperature to less than 1 Pa, after which the sample was cooled with liquid nitrogen to 77 K before krypton gas pulses were fed to the measuring room. The BET surface of the copolymer particles preferably is at least 0.025 m²/g, more preferably at least 0.035 m²/g and most preferably at least 0.045 or even at least 0.050 m²/g.

The bulk density of the material having this preferred structure may be as low as 700 kg/m3 and preferably is lower than 650 or even lower than 600, 590 or 500 kg/m3. The flocky and frayed structure having the specified BET surface has been found to make a layer of the infill material resilient and shock absorbing although, due to the low bulk density, only a relatively low amount of material is required to obtain a layer having desired thickness and properties.

Particles having these preferred shape and structure can be obtained by exposing spherical or pelletized particles to cutting forces at a temperature above the glass transition temperature of the polyolefin polymer content of the composition, to prevent the particles from becoming brittle since this may lead to ground particles having sharp edges or being rather smooth than flocky and frayed. More preferably this cutting is done above 0 °C, e.g. at room temperature or even up to 40 °C or higher but low enough to prevent melting of the copolymer. The cutting at said temperature causes plastic deformation of the resulting smaller parts, leading to the desired flocky and frayed structure. The aspect ratio varies and is mainly above 1.5 or even larger than 2, the surface appearance is very rough, including protruding hooks and lumps. It is believed that these rough irregular shapes could lead to a lower closest packing density. Moreover, the rough surface with hooks will cause internal friction between the particles, which may prevent a closer packing of the particles. The material according to the invention is extremely suitable as an infill material for synthetic grass structures like playing grounds for soccer, football and other sports and synthetic ski slopes and imparts unique shock absorbing properties and playing characteristics to the structures. The material may also comprise a mixture or blend of copolymers as defined above, if desired with further polyolefins or can be partly cross linked.

The invention relates also to a synthetic grass structure, comprising synthetic upstanding pile elements having dispersed between these elements a layer of the infill material according to the invention.

Synthetic grass structures are known in the art as are methods for their manufacture. These known structures can be applied in the invention. The infill material is applied as the top layer in case more layers, e.g. a sand layer to add weight to the grass structure and keep it on the ground. The thickness of the layer of infill material also is in a range known per se for this application. In general the thickness of the layer of infill material may range from 0.2 to 0.9 of the length of the upstanding piles and the ends of the piles sticking out above the infill layer may range from 5 to 25 mm.

The invention will be elucidated by the following example, without being restricted thereto.

### Example I

54 wt% Exact 8230®, a metallocene catalysed copolymer of ethylene and octene of DEXPlastomers, having a density of 882 g/cm³ and a Melt Flow Index of 30 g/min, 30 wt% of aluminum tri hydrate (ATH), 10 wt% Primol 352® oil of Exxon Mobil were blended in a ZSK 30 twin screw extruder with a further 6 wt% of PE master batches containing stabilizers and colorants at a temperature of 180 °C. The melt was extruded and chopped into pellets of 2.5 mm.

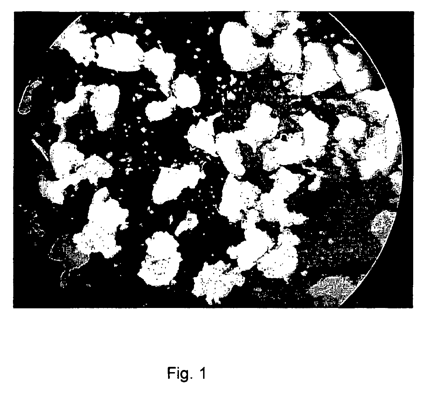

The pellets were cut into particles having an average size of 1.3 mm at 50 °C. The BET surface of the particles was 0.056 m²/g. A picture of the resulting particles is shown in Fig.1.

## Claims

1. Energy absorbing material comprising polyolefin particles having as a continuous phase a copolymer of ethylene or propylene and one or more α-olefin monomers, the copolymer having a density of at most 910 kg/m³ and the particles having been formed by cutting at a temperature above the glass transition temperature of the polyolefin wherein at least 75 wt% of the particles are of a shape below 0.45 on the Krumbein scale of sphericity.

2. Material according to claim 1, having a bulk density of less than 1500 kg/m³.

3. Material according to claim 1 or 2, wherein at least 75 wt.% of the particles has a size between 0.15 and 2.5 mm, according to ASTM standard 1921-89.

4. Material according to any of claims 1-3, wherein at least 75 wt% of the particles are of a shape below 0.3 on the Krumbein scale of sphericity.

5. Material according to any of claims 1-4, wherein the particles have a BET surface of at least 0.025 m²/g.

6. Use of the energy absorbing material according to any one of claims 1 -5 as infill material in synthetic grass structures.

## Patentansprüche

1. Energie absorbierendes Material, umfassend Polyolefin-Teilchen, die als eine kontinuierliche Phase ein Copolymer von Ethylen oder Propylen und einem oder mehreren α-Olefin-Monomeren aufweisen, wobei das Copolymer eine Dichte von maximal 910 kg/m³ aufweist, und die Teilchen durch Schneiden bei einer Temperatur oberhalb der Glasüberganstemperatur des Polyolefins gebildet wurden, wobei mindestens 75 Gew.-% der Teilchen eine Form von unterhalb 0,45 auf der Krumbein-Skale der Rundheit aufweisen.

2. Material nach Anspruch 1, das eine Schüttdichte von weniger als 1500 kg/m³ aufweist.

3. Material nach Anspruch 1 oder 2, wobei mindestens 75 Gew.-% der Teilchen eine Größe zwischen 0,15 und 2,5 mm gemäß ASTM-Standard 1921-89 aufweisen.

4. Material nach einem der Ansprüche 1-3, wobei mindestens 75 Gew.-% der Teilchen eine Form von unterhalb 0,3 auf der Krumbein-Skale der Rundheit aufweisen.

5. Material nach einem der Ansprüche 1-4, wobei die Teilchen eine BET-Oberfläche von mindestens 0,025 m²/g aufweisen.

6. Verwendung des Energie absorbierenden Materials nach einem der Ansprüche 1-5 als Auffüll-Material in synthetischen Gras-Strukturen.

## Revendications

1. Matière d'absorption d'énergie comprenant des particules de polyoléfine qui présentent comme phase continue un copolymère d'éthylène ou de propylène et un ou plusieurs monomères α-oléfine, le copolymère ayant une densité de 910 kg/m³ au maximum et les particules ayant été formées par découpage à une température supérieure à la température de transition vitreuse de la polyoléfine, étant précisé qu'au moins 75 % en poids des particules ont une forme de moins de 0,45 sur l'échelle Krumbein de sphéricité.

2. Matière selon la revendication 1, présentant une densité en vrac de moins de 1500 kg/m³.

3. Matière selon la revendication 1 ou 2, étant précisé qu'au moins 75 % en poids des particules ont une taille située entre 0,15 et 2,5 mm, selon la norme ASTM 1921-89.

4. Matière selon l'une quelconque des revendications 1 à 3, étant précisé qu'au moins 75 % en poids des particules ont une forme de moins de 0,3 sur l'échelle de Krumbein de sphéricité.

5. Matière selon l'une quelconque des revendications 1 à 4, étant précisé que les particules ont une surface BET d'au moins 0,025 m²/g.

6. Utilisation de la matière d'absorption d'énergie selon l'une quelconque des revendications 1 à 5 comme matière de remplissage dans des structures de gazon synthétique.
